# EUROPÄISCHE PATENTSCHRIFT

(11) **EP 0 573 038 B1**
(45) Veröffentlichungstag und Bekanntmachung des Hinweises auf die Patenterteilung: **04.09.1996**
(21) Anmeldenummer: 93108936.1
(22) Anmeldetag: 03.06.1993
(51) Int. Cl.: B03B 9/06

(54) **Verfahren zum Materialrecycling der Innenverkleidungsteile von Fahrzeugen**
Method of recycling interior lining parts from vehicles
Procédé de recyclage d'éléments de revêtement intérieur de véhicules

(30) Priorität: 04.06.1992 DE 4218443
(43) Veröffentlichungstag der Anmeldung: 08.12.1993
(73) Patentinhaber: LIGNOTOCK GmbH, D-36205 Sontra (DE)
(72) Erfinder: Nicolay, Albert, Dr., W-3446 Meinhard-Neuerode (DE); Melzer, Klaus, W-4300 Essen 17 (DE)
(74) Vertreter: Pfenning, Meinig & Partner

(56) Entgegenhaltungen:
- EP-A- 0 144 666
- EP-A- 0 469 270
- DE-A- 4 128 927
- US-A- 5 080 291

## Beschreibung

Die Erfindung bezieht sich auf ein Recyclingverfahren gemäß Oberbegriff des Anspruchs 1, sowie auf eine Vorrichtung zur Durchführung des Verfahrens.

In zunehmendem Maße gewinnt das Recycling von Automobilen oder wenigstens Teilen hiervon an technischer und wirtschaftlicher Bedeutung. Innenverkleidungsteile der Fahrgastzellen bestehen verbreitet aus kaschierten Formteilen aus Holzfaserwerkstoffen. Ihre Herstellung ist seit längerer Zeit allgemeiner Stand der Technik, ihre Wiederverwendung bereitet jedoch zunächst Schwierigkeiten, da sie als sogenannte Verbundwerkstoffe materialuneinheitlich sind. Unter Holzfaserwerkstoffen sind hier Werkstoffe zu verstehen, die vorwiegend aus Lignozellulose bzw. aus Zellulosefasern bestehen, die mit thermoplastische und duroplastische Bindemitteln verpreßt sind. Auch Hartfaserpappen werden häufig in diese Werkstoffgruppe einbezogen. Dabei können die unter dem Begriff Holzfaserwerkstoffe zusammengefaßten Materialien durchaus auch Anteile anderer Faserarten, wie beispielsweise Polymerfasern, Naturfasern oder Textilfasern aller Art enthalten.

Bisher bekannt geworden ist ein Recyclingverfahren für aus derartigen Materialien bestehende kaschierte Innenverkleidungen durch die DE-AS 41 28 927. Hier bestehen die Innenverkleidungsteile aus jeweils einem Trägerteil, das beschichtet bzw. mit einer sichtseitigen Kaschierung versehen ist und gegebenenfalls am Trägerteil befestigte, für ihren Einbau erforderliche Kunststoffelemente aufweist. Entsprechend dem Recyclingverfahren werden die Teile zu partikelförmigen gemischten Mahlgut verkleinert, das dann nach einer erneuten Zugabe von geeignetem Beleimungsmaterial zwischen frische bzw. aus nicht zurückgewonnenem Material bestehende Faservliese aus Kunst- oder Naturfasern eingestreut wird, so daß ein mattenbandförmiges dreischichtiges Zwischenprodukt mit mittig eingelagertem mindergewonnenem Material entsteht. Dieses Zwischenprodukt kann nachfolgend in der an sich bekannten Weise zu Formteilen konfektioniert werden, also dem üblichen Preß- und Kaschiervorgängen unterworfen werden.

Bei diesem bekannten Recyclingverfahren für Formteile von Innenverkleidungen wird allerdings der Fasercharakter der ursprünglichen Holzfaser durch den Mahlprozess weitgehend zerstört, wodurch eine deutliche Qualitätseinbuße der aus dem rückgeführten Werkstoff gefertigten Formteile zu befürchten ist. Dieser Qualitätsverlust kann zwar durch vermehrte Zugabe von Kunst- oder Naturfasern ausgeglichen werden, was jedoch andererseits zu einer kostenintensiveren Fertigung führt.

Das angegebene Verfahren stellt somit kein Recyclingverfahren dar, bei dem aus einem ursprünglichen Faserwerkstoff ein gleichwertiges Neuprodukt erhalten wird. Das Verbundprodukt, so wie es das Industrieprodukt "Innenverkleidungsteil" darstellt, besteht nach dem vorgesagten aus Holzfaserträgerteil, Kunststoffolie und/oder Kunststoffgewebekaschierung und zusätzlichen Ausstattungsteilen, wie beispielsweise Retainern, Clips oder dergleichen, und läßt sich so nicht sortenrein in die einzelnen Stoffklassen separieren, d.h. derart in getrennte Bestandteile zerlegen, daß sie einem wiederholbaren Herstellungsverfahren gleicher hochwertiger Qualität zugeführt werden könnten.

Die vorliegende Erfindung hat sich daher zur Aufgabe gestellt, ein Verfahren zu entwickeln, mit dem es möglich wird, Innenverkleidungsteile von Fahrzeugen oder dergleichen so aufzubereiten, daß aus dem rückgewonnenen Holzfaserstoffen der Trägerteile hinlänglich gleichwertige wiederverwendbare Faserwerkstoffe gewonnen werden können, wobei die wiederverwendbaren Faserwerkstoffe hochrein von den Kunststoffbestandteilen der Kaschierung und gegebenenfalls anderen Kunststoffausstattungsteilen separiert werden sollen. Die erfindungsgemäße Vorrichtung zur Durchführung des Verfahrens soll eine besonders wirtschaftliche Aufbereitung ermöglichen.

Die vorliegende Aufgabe wird erfindungsgemäß durch die Schaffung eines Verfahrens ermöglicht, wie es im kennzeichnenden Teil des Anspruchs 1 angegeben ist.

Die Unteransprüche stellen vorteilhafte Weiterbildungen des Verfahrens dar und enthalten die Merkmalskennzeichnung der Vorrichtung zur Durchführung des Verfahrens sowie hierfür geeignete Ausgestaltungen.

Verfahrenstechnisch ist zunächst die faserschonende Auflockerung des festen Holzfaserverbundes und die Flexibilisierung der Holzfasern im noch nicht zerkleinerten Formteil ein wesentlicher erfindungsgemäßer Schritt. Erst dann und nur dadurch wird es im weiteren Verlauf des Verfahrens möglich, den zunächst festen Holzfaserverbund ohne nennenswerte Faserzerstörung wieder aufzulösen. Im erweichten Zustand läßt sich das komplette Formteil in einem weiteren nachgeschalteten Verfahrensschritt walken, dabei weitgehend einebnen und für die vollständige Faserauflösung aufbereiten. Mit dem Walkvorgang oder der gleichen Vielfach-Biegeabläufen lösen sich am Formteil befestigte Bauelemente, wie Clips und Retainer, und können in dieser Verfahrensstufe bereits problemlos vom Formteil separiert werden, ohne selbst einer Zerkleinerung unterworfen zu sein. Danach läßt sich das gewalkte und eingeebnete Formteil einer Reißeinrichtung zuführen, wobei die vorherige weitgehende Einebnung der ursprünglichen dreidimensionalen Raumform die Zuführung zu und die Greifvorgänge in der Reißeinrichtung erleichtert. In der Reißeinrichtung kann der aufgelockerte Holzfaserverbund direkt, d.h. ohne Zwischenschritte, zu dem wiederverwertbaren Faserstoff aufbereitet werden. Die Kaschierung, gleichgültig ob es sich dabei um Folienkaschierung, Gewebekaschierung oder eine Gemischkaschierung handelt, wird gleichzeitig zu groben, d.h. größerflächigen Aufrissen aufgelöst. Die erheblichen Abmessungsunterschiede zwischen dem wiederaufgefaserten Holzfaserwerkstoff einerseits und dem Grobriß der Kaschierung andererseits ermöglichen die anschließende einwandfreie Separierung von Faserwerkstoff und Grobriß ohne größeren technischen Aufwand bzw. ohne technische Schwierigkeiten, so daß die unterschiedlichen Bestandteile des ursprünglichen Innenverkleidungsteils getrennt gesammelt abgeführt und einer hochwertigen Wiederverwertung, nämlich zum Herstellen neuer Innenverkleidungsteile, zugeführt werden können.

Die Auflösung des Holzfaserverbundes und die Flexibilisierung können mittels unterschiedlicher Verfahren durchgeführt werden. Je nach dem bei der Erstverpressung verwendeten Bindemitteln des Holzfaserstoffe kann einer Auflösung des Verbundes durch unterschiedliche Lösungsmitteleinwirkungen und/oder Wasser zweckmäßig sein. In Frage kommen hierfür alle bekannten Lösungsmittel, die geeignet sind, die jeweiligen Bindemittel an- oder aufzulösen. Die Verwendung von Lösungsmitteln ist allerdings häufig mit erheblichen Umweltbelastungen verbunden, deshalb kostenintensiv für die damit verbundene Entsorgung. Ein kostengünstigeres Auflockerungs- und Flexibilisierungsverfahrens ist die Wasserdampfbehandlung der Altformteile oder deren Beaufschlagung mit Wasser vorzugsweise erhöhter Temperatur. Durch die sich dabei ergebenden Quellvorgänge der Holzfasern lockert sich der Faserverbund, und die Holzfasern selbst werden ausreichend flexibilisiert. Die erhöhte Temperatur bei der Verwendung von Wasser, aber auch anderen Lösungsmitteln, sorgt zwar für eine Beschleunigung des Quellvorganges und damit für eine zeitliche Minimierung dieses Verfahrensschrittes, energetisch günstiger ist es jedoch, diese Auflockerung mit Wasser bei Umwelttemperatur vorzunehmen, d.h. diesem Verfahrensschritt einen längeren Zeitabschnitt zu widmen.

Das Walken und Einebnen des Altformteils, daß sich an die Lockerung des Holzfaserverbundes und die Flexibilisierung der Holzfasern anschließt, kann technisch einfach dadurch ausgeführt werden, daß das Formteil im nachgeschalteten Verfahrensschritt durch ein Walzgerüst mit mindestens zwei in ihrer Achslage gegeneinander versetzten Walzen geführt wird. Durch die örtlichen Biegevorgänge beim Walzendurchgang lösen sich die genannten aufgeschweißten Bauteile, wie Clips oder dergleichen, problemlos ab und lassen sich in dieser Form aus dem weiteren Verfahrensablauf separieren. Der Durchgang des erweichten Teils durch die Walzen ebnet dessen möglicherweise noch vorhandene dreidimensionale Raumform weitgehend ein und das gewonnene flächige teigweiche Material kann so einer geeigneten Reißvorrichtung zugeführt werden, mit der das Auflösen des Holzfaserverbundes und der Grobriß der Kaschierung durch zugkraftausübenden Nadelwalzen vorgenommen wird, wobei die Nadelwalzen von der Holzfaserseite her in das Formteil einwirken, also dieses zerreißend in den Holzfaserverbund eingestochen werden.

Die im vorgenannten Verfahrensschritt erfolgte Sichtung von Holzfaserwerkstoff und Grobriß der Kaschierung bereit nunmehr in überraschender Weise keinerlei technische Schwierigkeiten mehr. Daher können an sich bekannte windsichtungsverfahren, aber auch geeignete Siebsichtungen bzw. Kombinationen hiervon, angewendet werden, um die verschiedenen um Größenordnungen unterschiedlichen Fraktionen voneinander zu trennen. Versuche ergaben in diesem Zusammenhang, daß eine nahezu 100%ige Trennung zwischen Holzfaserwerkstoff und Kunststofffraktion bereits bei nur einstufigem Trennverfahren möglich ist. Da infolge der Flexibilisierung der Holzfasern vor dem Auflösen des Holzfaserverbundes der Verlust an Faserlänge nur minimal ist, lassen sich die so wiedergewonnen Holzfasern direkt mit den üblichen Verfahrensweisen für die Herstellung von Innenverkleidungen zu neuen Holzfaserformteilen verarbeiten. Ein Qualitätsverlust konnte hierbei bezüglich des neuen Produktes nicht festgestellt werden. Die abgetrennte Kunststofffraktion läßt sich mit üblichen Wiederaufbereitungsverfahren für Kunststoffe gleichfalls erneut verwenden, und zwar insbesondere dann, wenn der Fertigung des auf zuarbeitenden Erstproduktes eine Normung der verwendeten Kaschierungsfolie und Kaschierungsgewebe beispielsweise nach Polymerklassen vorgegeben wurde.

Die Vorrichtung zur Durchführung des erfindungsgemäßen Verfahrens besteht aus einer oder mehreren kontinuierlich fördernden Transporteinrichtungen, wie beispielsweise aus endlos umlaufenden Transportbändern oder Transportketten. Hiermit werden die rückgeführten Altformteile zunächst durch die die Auflockerung des Holzfaserverbundes und die Flexibilisierung der hierin enthaltenen Holzfasern bewirkenden Verfahrensstationen transportiert, sowie durch Einrichtungen, die das Walken und Einebnen der Formteile bewerkstelligen, bis hin zur Reißstation und damit bis zur vollständigen Auflösung des Faserverbundes bei gleichzeitiger Vorgabe eines Grobrisses der Kaschierung.

Nach dem Walken und Einebnen des rückgeführten Altformteils schließt sich eine Sammel- und/oder Abführeinrichtung für die bei dem Walken anfallenden Bauteile bzw. Montageteile, wie Retainer, Clips oder dergleichen, an. Hierfür kann beispielsweise wiederum ein Fließband Anwendung finden, welches zu einem Sammelbehälter führt. Die Reißstation, der die Formteile, wie beschrieben, nachfolgend zugeführt werden, besteht aus mindestens einer Nadelwalze mit einer dieser zugeordneten Klemmvorrichtung, und zwar derart, daß die Nadelwalze auf das Reißgut, d.h. auf die erweichten flachen Altteile, beschleunigende Zugkräfte ausübt, etwa in der Form, daß das Reißgut mittels Transportwalzen zugeführt wird, deren Umfangsgeschwindigkeit geringer ist als die Umfangsgeschwindigkeit der Nadelwalzen. Der Reißstation ist dann eine kontinuierlich arbeitende Förderstrecke nachgeordnet, mit deren Hilfe das zerrissene Fasergut einer Separierungseinrichtung zugeführt wird, wobei diese Separierungseinrichtung getrennte Abführeinrichtungen für den Faserstoff und den Grobriß aufweist.

Eine vorteilhafte Ausführung der Auflockerungs- und Flexibilisierungsstation bedient sich eines Wasserbades, dessen Wassertemperatur über 40°C liegt und das von den Formteilen kontinuierlich durchlaufen wird. Bei Wassertemperaturen, die gegenüber der Umwelttemperatur nicht erhöht sind, ist eine längere Verweildauer der Altformteile im Wasserbad erforderlich. Wassertemperaturen zwischen 80 und nahe 100°C haben sich für schnelle Durchläufe als besonders vorteilhaft erwiesen. Die Fördereinrichtung für den Durchlauf der Altformteile durch das Wasserbad besteht beispielsweise aus einer oder mehreren Förderketten, die so ausgebildet sind, daß das Formteil nach dem Durchlauf gekippt werden kann, so daß die im dreidimensionalen Formteil eventuell vorhandenen Höhlungen im wesentlichen kein Wasser hin zur nächsten Verarbeitungsstation mitführen. Dem Wasserbad ist zweckmäßig eine Filteranlage zugeordnet, die mögliche Schadstoffbelastungen aus dem Brauchwasser ausfiltert. Geeignete Umwälzverfahren sind hier bevorzugt anzuwenden.

Das Walken und Einebnen der flexibilisierten Formteile kann vorteilhaft in einem Mehrrollenwalzgerüst durchgeführt werden, dessen Rollen derart versetzt hintereinander angeordnet sind, daß die Formteile dieses Gerüstes mit mindestens einem wellenförmig verlaufenden Biegevorgang durchlaufen. Insbesondere zum sicheren Lösen von angeschweißten Kunststoffbauteilen ist es zweckmäßig, mehrere Biegevorgänge hintereinander dem Formteil aufzuerlegen.

Die der Zerreißstrecke nachgeordnete Förderstrecke ist zweckmäßigerweise als Luftförderstrecke ausgeführt. Andere Ausführungsformen, wie beispielsweise die Verwendung von Schneckenförderern oder Förderbändern, können gleichermaßen Anwendung finden. Die Luftförderstrecke hat den Vorteil, daß sie mit erwärmter Förderluft betrieben werden kann, wodurch sie die Verarbeitungsfeuchte der Holzfasern, so wie sie rückgewonnen worden sind, gleichzeitig auf eine optimale Wiederverarbeitungsfeuchte der Fasern einstellen läßt. Das Reißgut besteht nunmehr aus dem aufgelösten Holzfaserverbund und dem Grobriß der Kaschierung, so daß die beiden die Reißstation verlassenden Materialfraktionen mittels eines Luftförderers auf ein umlaufendes Siebband gefördert werden können, um auf technisch einfachste Weise getrennt zu werden. Im Bereich der Fördergutaufgabe befindet sich an der Unterseite des Siebbandes ein Unterdruckkasten. Bei abgestimmter Maschenweite des Siebbandes fällt hierbei der Faserwerkstoff in den Unterdruckkasten, während der Grobriß der Kaschierung durch das umlaufende Siebband seitlich in einen hiervon getrennten Behälter ausgeworfen werden kann. Dieser Separierungsvorgang läßt sich weiter dadurch verbessern, daß der Oberseite des Siebbandes im Aufgabebereich des anfangs Mehrkomponentenwerkstoffes mindestens eine rotierende Bürste angeordnet ist, deren Achse vorzugsweise im rechten Winkel zur Laufrichtung des Siebbandes liegt. Der Durchtritt des Faserwerkstoffes durch das Siebband wird hierdurch zusätzlich begünstigt. Der durch das Siebband gesaugte und gebürstete Faserwerkstoff wird anschließend durch Luftförderer aus dem Unterdruckkasten entfernt.

Eine Siebsichtung hinter der Zerreißstation ist auch dadurch möglich, daß das aus mehreren Komponenten bestehende Fördergut einer rotierenden Siebtrommel zugeführt, wobei die Achse der rotierenden Siebtrommel gegenüber der Horizontalen vorteilhaft geneigt ist. Dadurch erfolgt ein automatischer Transport des Siebgutes in Längsrichtung der Trommel. Die Siebung kann auch bei einer Siebtrommel dadurch unterstützt werden, daß ihr zumindest bereichsweise mindestens ein Unterdruckkasten zugeordnet ist, dessen Wirkung dem Unterdurckkasten beim vorstehend genannten Siebband entspricht. Die Förderung des Siebgutes in der Trommel sollte hierbei durch Leitflächen oder dergleichen Förderelemente, wie beispielsweise Ausschnitte aus einer Transportschnecke, gebildet werden. Die Unterstützung der Siebwirkung durch geeignet angeordnet Bürsten, die gegenüber der Trommelwand eine Relativbewegung ausführen, ist gleichfalls vorteilhaft. Die Bürsten werden zweckmäßig im Bereich der Unterdruckkästen angeordnet.

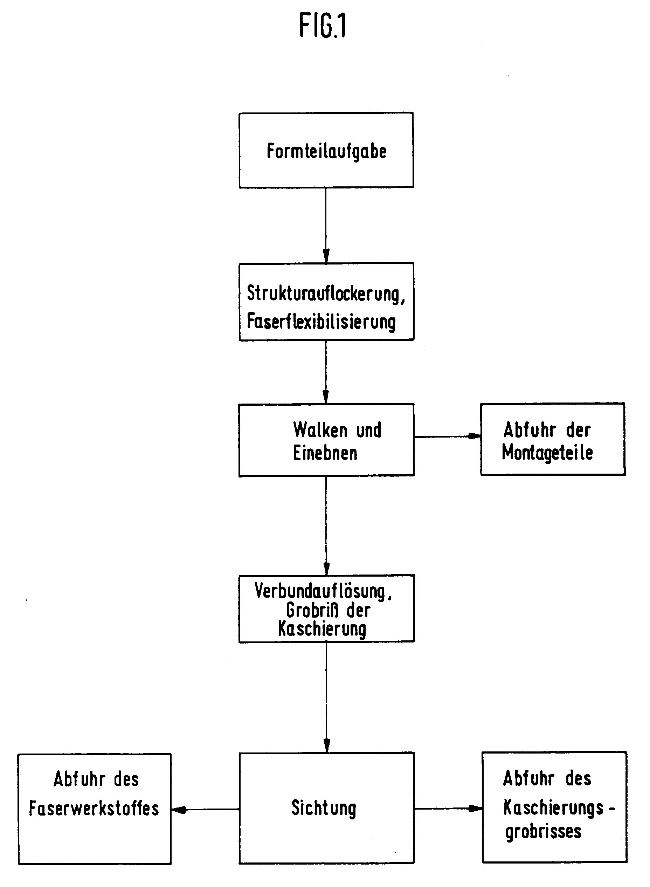

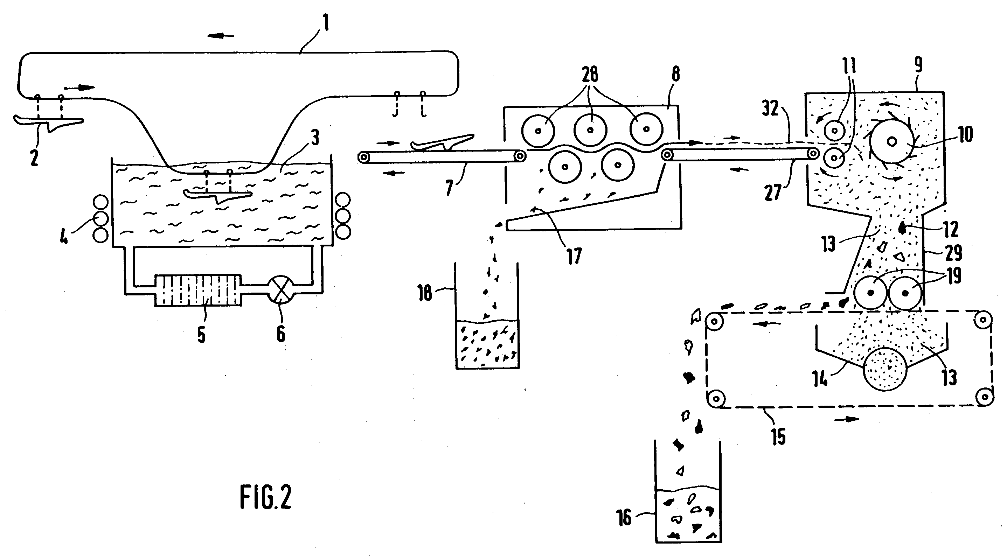

Die wie vorstehend aufgeführten Vorrichtungsteile zur Durchführung des erfindungsgemäßen Verfahrens wie auch der Verfahrensablauf selbst sind in den beigefügten Figuren 1 und 2 näher verdeutlicht. Es zeigen
- Fig. 1: den schematischen Ablauf des erfindungsgemäßen Verfahrens mittels eines Blockdiagramms und
- Fig. 2: eine schematisierte Darstellung der die Vorrichtung bildenden einzelnen Einrichtungen, mittels derer sich das Verfahren beispielsweise ausführen läßt.

Das Blockschaltdiagramm gemäß Fig. 1 geht aus von den bereits aus zu verschrottenden Fahrzeugen entnommenen und rückzuführenden Altformteilen in ihrer dreidimensionalen starren und kaschierten Ausgangsform. Diese werden mit ihrer ehemaligen Sichtseite nach oben der Formteilaufgabe zugeführt, etwa über Bandförderer und von hier gleichfalls über Bänder oder dergleichen Fördereinrichtungen weiter zu einer Strukturauflockerung und Faserflexibilisierung, wie vorstehend beschrieben.

Das erweichte und vorzugsweise eingeebnete Verbundteil wird dann ausreichenden Biegeprozessen unterworfen, wie Walken, Kneten oder dergleichen, womit gleichzeitig die Entfernung der genannten dem Formteil anhaftenden Montageteile verbunden ist. Eine vollständige Verbundauflösung des Holzfaserstoffes erfolgt anschließend mit gleichzeitiger Herstellung einer Grobrißstruktur bezüglich der Kaschierung. Die nachgeschaltete Sichtung der in unterschiedliche Strukturen aufgelösten mehrkomponentigen werkstoffmischung führt zu einer nahezu vollständigen Trennung in die Komponente Faserwerkstoff einerseits und die Werkstoffkomponente Kaschierungsgrobriß andererseits.

Gemäß der schematischen Darstellung der Vorrichtung zur Durchführung des Verfahrens in Fig. 2 wird von einer in sich geschlossen umlaufenden Transportkette 1 ausgegangen, wobei die Umlaufrichtung mittels Pfeildarstellung angedeutet ist. Das nach der vorliegenden Verfahrensweise auf zuarbeitende Altformteil 2 wird demnach mittels des Kettenförderers an diesem hängend ein Lösungsmittelbad eingebracht, hier ein Wasserbad 3, und durch dieses mit geeigneter Geschwindigkeit hindurchbewegt. Über außerhalb des das Wasserbad aufnehmenden Behälters angeordnete Heizelemente 4 wird das Wasserbad 3 auf einer Temperatur von ca 95°C gehalten. Über eine Umwälzpumpe 6 wird das Wasser des Wasserbades 3 kontinuierlich oder diskontinuierlich durch eine Filteranlage 5 geschickt und in dieser von sich möglicherweise ansonsten anreichernden Schadstoffen befreit. Nach Verlassen des Wasserbades 3 fällt das erweichte Altformteil 2 auf ein Förderband 7, über welches es von der Quellstation zur Trenneinrichtung 8 bewegt wird, wobei es zuvor durch geeignete Bahnführung der Transportkette 1 trotz seiner vorliegenden dreidimensionalen Formgebung keine größeren Mengen an Wasser bzw. Lösungsmittel mehr mitschleppt. Die erhöhte Wassertemperatur garantiert, daß der ansonsten relativ langsame Quellvorgang für die notwendige Erweichung des Formteils 2 relativ schnell abläuft, wobei die Verweildauer des Formteils 2 im Wasserbad 3 optimal der übrigen Verarbeitungsgeschwindigkeit angepaßt werden kann. Versuche haben gezeigt, daß eine ausreichende Strukturauflockerung und Faserflexibilisierung bereits bei Durchlaufzeiten zwischen 30 sek und 180 sek durch das erwärmte Wasserbad 3 erreicht werden können.

Der Förderer 7 bewegt das erweichte Formteil 2 in eine Trenneinrichtung 8, die im wesentlichen aus einer Mehrzahl von Walkwalzen 28 besteht, deren Achsen in der dargestellten Weise gegeneinander versetzt sind, so daß das Formteil gezwungen wird, durch eine Mehrzahl von Walzenpaarspalten hindurchzulaufen, und zwar in der Schnittdarstellung gemäß einer Wellenlinienform. Die mehrfach hintereinander geschalteten Wechselbiegevorgänge stellen ein Walken des erweichten Formteils dar, bei dem dieses nicht nur weitgehend eingeebnet wird, sondern wobei auch die am Formteil anhaftenden Bauelemente bzw. Montageteile 17 abgelöst werden und von hier in einen Sammelbehälter 18 fallen, um einer getrennten Wiederverwertung zugeführt zu werden.

Aus der Mehrzahl der Walzen 28, die zueinander Walzenpaare bilden, läuft das nunmehr erweichte aus Kaschierung und ursprünglichen Holzfaserträgerteil bestehende Verbundteil 32 in eine Einrichtung 9 zur Auflösung des Holzfaserverbundes, die gleichzeitig die als Reineinrichtung arbeitet und geeignet ist, aus der Kaschierung einen Grobriß herzustellen. Mit dem Einlauf des Verbundteiles 32 über den Endlosförderer 27 in die Einrichtung 9 wird dieses zunächst von einem Walzenpaar 11 erfaßt, welches benachbart zu mindestens einer Nadelwalze 10 drehbar angeordnet ist. Die Handfiebe (?) des Walzenpaares 11 sind wie diejenigen der Walzen 28 und dasjenige der Nadelwalze 10 in der schematischen Darstellung gemäß Fig. 2 weggelassen. Das Einfördern über das Walzenpaar 11 sichert die direkte Inkontaktbringung des Verbundstoffteils 32 mit der Nadelwalze 10, wobei zwischen beiden eine Beschleunigung dadurch erreicht wird, daß die Umfangsgeschwindigkeit des Walzenpaares 11 geringer ist als diejenige der Nadelwalze 10. Damit wird eine sichere Auflockerung des Holzfaserwerkstoffes unter Zugkrafteinwirkung und eine Art "Abkämmen" der Kaschierung vom erweichten Trägerteil bei gleichzeitig grob erfolgendem Zerriß der Kaschierung sichergestellt.

Versuche haben gezeigt, daß die Abmessungen der Grobrißpartikel 12 im allgemeinen mehrere cm² groß sind, während die Faserstruktur der Holzfaserwerkstoffe in ihre ursprünglich unverpreßte Form aufgelöst wird. Sofern bei vorhandenen Gewebekaschierungen einzelne Gewebefäden durch den Eingriff der Nadeln der Nadelwalze mit ausgekämmt werden, verbleiben diese zwar im Holzfaserwerkstoff, was dessen Qualität eher verbessert, wobei die durchgeführten Versuche jedoch auch zeigen, daß Textilkaschierungen die Einrichtung 9 eher grobstückiger verlassen als vor den Kaschierungen und damit leicht zu separieren sind.

Die Einrichtung 9 trennt somit den einlaufenden erweichten Verbundwerkstoff in einen vollständig aufgefaserten Holzfaserwerkstoff 13 und Grobrißteile 12 der ursprünglichen Kaschierung. Dieses Konglomerat wird mittels des Luftförderers 29 einem in angegebener Pfeilrichtung umlaufenden Siebband 15 zugeführt. Der Holzfaserwerkstoff 13 wird im Ausführungsbeispiels mittels eines Bürstenwalzenpaares 19 und unter der Sogwirkung des Unterdruckkastens 14 durch die Maschen des Siebes abgeführt, während der Grobriß 12 auf dem Transportsieb verbleibend einem Sammel- und Abfuhrbehälter eingegeben werden kann. Die Weiterverarbeitung der Einzelkomponenten erfolgt dann wie die jenige von frischem Rohmaterial bei der Herstellung von Innenverkleidungsteilen der Kraftfahrzeugindustrie.

## Patentansprüche

1. Verfahren zum Materialrecycling der Innenverkleidungsteile von Fahrzeugen aus kaschierten Holzfaserformteilen,
**gekennzeichnet durch**
folgende Verfahrensschritte:
a) das kaschierte Formteil wird einem zumindest seine Dicke vergrößernden Quellvorgang durch Feuchteeinwirkung unterworfen zur Auflockerung des Holzfaserverbundes und Flexibilisierung der Holzfasern,
b) das im Holzfaserverbund erweichte Formteil wird durch Biegevorgänge von anhaftenden Montageteilen befreit,
c) nachfolgend wird der erweichte Holzfaserverbund durch einen Reißvorgang zu direkt wiederverwendbarem Faserstoff aufgelöst unter gleichzeitiger Abtrennung der Kaschierung vom Holzfaserstoff, und schließlich
d) werden die Faserstoffe und die Kaschierung, nach dem Verfahrensschritt c) als Gemenge vorliegend, aufgrund ihrer unterschiedlichen Größe und/oder Wichte mechanisch voneinander separiert.

2. Verfahren nach Anspruch 1, dadurch gekennzeichnet, daß die Auflockerung des Holzfaserverbundes und die Flexibilisierung der Holzfasern mittels Wasser, gegebenenfalls bei erhöhter Temperatur vorgenommen wird.

3. Verfahren nach Anspruch 1 oder 2, dadurch gekennzeichnet, daß die Biegevorgänge ein Walken und/oder Einebnen des Formteils umfassen.

4. Verfahren nach einem der Ansprüche 1 bis 3, dadurch gekennzeichnet, daß zum Auflösen des erweichten Holzfaserverbundes ein Fluid mit hoher Strömungsgeschwindigkeit, das auf die Holzfaserseite der Formteile gerichtet wird, verwendet wird.

5. Verfahren nach einem der Ansprüche 1 bis 3, dadurch gekennzeichnet, daß der erweichte Holzfaserverbund durch Einwirkung einer rotierenden Stachelwalze aufgelöst wird.

6. Verfahren nach mindestens einem der Ansprüche 1 bis 5, dadurch gekennzeichnet, daß die Separierung von Faserstoff und Kaschierungsmaterial durch Windsichtung erfolgt.

7. Verfahren nach mindestens einem der Ansprüche 1 bis 5, dadurch gekennzeichnet, daß die Separierung des Faserstoffes durch Siebsichtung erfolgt.

8. Vorrichtung zur Durchführung des Verfahrens nach einem der Ansprüche 1 bis 7, gekennzeichnet durch ein temperierbares Wasserbad (3) mit zugeordnetem Kettenförderer (1), eine Biege- und/oder Walkstation (8) mit zugeordneter Ausbringung der durch Biegen und/oder Walken entfernten Montageteile (17), eine Einrichtung (9) zum Auflösen des Holzfaserverbundes unter Zerreißen der Kaschierung, eine nachgeordnete Sichtungsstation (13,14,15) zur mechanischen Trennung von Faserstoff und dem Grobriß (12) der Kaschierung, sowie Fördereinrichtungen (1,7,27) zum Transport der Formteile (2,32) oder deren Bestandteile zwischen den Bearbeitungsstationen.

9. Vorrichtung nach Anspruch 8, dadurch gekennzeichnet, daß die Einrichtung (9) zum Auflösen des erweichten Holzfaserverbundes aus mindestens einer Nadelwalze (10) mit zugeordneter Klemmvorrichtung (11) besteht, wobei die Nadelwalze (10) Zugkräfte auf die Kaschierung und den Holzfaserverbund (32) ausübt.

10. Vorrichtung nach Anspruch 8 oder 9, dadurch gekennzeichnet, daß die Biege- und/oder Walkstation (8) ein Mehrrollen-Walzgerüst ist.

11. Vorrichtung nach einem der Ansprüche 8 bis 10, dadurch gekennzeichnet, daß die Fördereinrichtungen (1,7,27) als Band-, Ketten- und/oder Luftförderer ausgebildet sind.

12. Vorrichtung nach Anspruch 11, dadurch gekennzeichnet, daß der Luftförderer für den Holzfaserstoff (13) mit erwärmter Förderluft betrieben ist.

13. Vorrichtung nach einem der Ansprüche 8 bis 12, dadurch gekennzeichnet, daß die Sichtungsstation zur Separierung von Holzfaserwerkstoff und Kaschiermaterial aus einem umlaufenden siebband (15) besteht, dem an seiner Unterseite zumindest bereichsweise ein Unterdruckkasten (14) zugeordnet ist.

14. Vorrichtung nach Anspruch 13, dadurch gekennzeichnet, daß der Oberseite des Siebbandes (15) im Bereich des Unterdruckkastens (14) mindestens eine rotierende Bürste (19) zugeordnet ist.

15. Vorrichtung nach einem der Ansprüche 8 bis 12, dadurch gekennzeichnet, daß die Sichtungsstation eine rotierende Siebtrommel aufweist.

16. Vorrichtung nach Anspruch 15, dadurch gekennzeichnet, daß die Achse der rotierenden Siebtrommel gegenüber der Horizontalen geneigt ist.

17. Vorrichtung nach Anspruch 15 oder 16, dadurch gekennzeichnet, daß der Außenseite der Siebtrommel zumindest bereichsweise mindestens ein Unterdruckkasten zugeordnet ist.

18. Vorrichtung nach einem der Ansprüche 15 bis 17, dadurch gekennzeichnet, daß die Innenseite der Siebtrommel Förderelemente in Form von Leitflächen oder dergleichen aufweist.

19. Vorrichtung nach einem der Ansprüche 15 bis 18, dadurch gekennzeichnet, daß der Innenseite der Siebtrommel mindestens bereichsweise gegenüber der Trommelwand eine Relativbewegung ausführende Bürste zugeordnet sind.

## Claims

1. Process for recycling material of interior lining parts of vehicles made of laminated wood-fibre shapes,
**characterized by** the following processing stages:
a: the laminated shape is subjected to a swelling process by the effects of humidity which increases at least its thickness in order to loosen up the wood fibre composite and to flexibilize the wood fibres;
b: the shape softened in the wood fibre composite is freed from adhering mounting parts by way of bending processes;
c: the softened wood fibre composite is then dissolved by a tearing process into a fibre material which is directly re-usable whilst at the same time separating the lamination from the wood fibre material, and finally
d: the fibre materials and the lamination, following processing stage c) present as a mixture, are now mechanically separated from each other based on their different size and/or weight.

2. Process according to Claim 1, **characterized in that** loosening of the wood fibre composite and flexibilization of the wood fibres is carried out by means of water, if appropriate at increased temperature.

3. Process according to Claim 1 or 2, **characterized in that** the bending processes include milling and/or leveling of the shape.

4. Process according to one of Claims 1 to 3, **characterized in that** for dissolving the softened wood fibre composite a fluid is used at high flow speed which is oriented toward the wood fibre side of the shapes.

5. Process according to one of Claims 1 to 3, **characterized in that** the softened wood fibre composite is dissolved under the effect of a rotating spike roller.

6. Process according to at least one of Claims 1 to 5, **characteriazed in that** separation of fibre material and laminating material is carried out by way of air separation.

7. Process according to at least one of Claims 1 to 5, **characterized in that** separation of the fibre material is carried out by way of sieving.

8. Device for carrying out the process according to one of Claims 1 to 7, **characterized by** a tempered water bath (3) with associated chain conveyer (1), a bending and/or milling station (8) with associated removal of assembly parts (17) removed by bending and/or milling, a device (9) for dissolving the wood fibre composite by tearing the lamination, a downstream sighting station (13, 14, 15) for mechanical separation of fibre material and coarse tear (12) of the lamination, as well as conveying devices (1, 7, 27) for transporting the shapes (2, 32) or their parts between the processing stations.

9. Device according to Claim 8, **characterized in that** the device (9) for dissolving a softened wood fibre composite comprises at least one needle roller (10) with associated clamping mechanism (11), and the needle roller (10) applies pulling forces to the lamination and the wood fibre composite (32).

10. Device according to Claim 8 or 9, **characterized in that** the bending and/or milling station (8) is a multiple roller rolling frame.

11. Device according to one of Claims 8 to 10, **characterized in that** the conveying devices (1, 7, 27) are designed as a band, chain and/or air conveyor.

12. Device according to Claim 11, **characterized in that** the air conveyor for the wood fibre material (13) is operated with heated conveying air.

13. Device according to one of Claims 8 to 12, **characterized in that** the sighting station for separating wood fibre material and laminating material is composed of a peripheral sieve band (15) which is at its bottom side at least in some areas associated with a negative pressure box (14).

14. Device according to Claim 13**, characterized in that** the top side of the sieve band (15) is in the area of the negative pressure box (14) associated with at least one rotating brush (19).

15. Device according to one of Claims 8 to 12, **characterized in that** the sighting station comprises a rotating sieve drum.

16. Device according to Claim 15, **characterized in that** the axis of the rotating sieve drum is tilted relative to the horizontal.

17. Device according to Claim 15 or 16, **characterized in that** the outside of the sieve drum is associated at least in some areas with at least one negative pressure box.

18. Device according to one of Claims 15 to 17, **characterized in that** the inside of the sieve drum comprises conveying elements in the form of guide surfaces or the like.

19. Device according to one of Claims 15 to 18, **characterized in that** the inside of the sieve drum is associated at least in some areas with a brush which carries out a relative movement to the drum wall.

## Revendications

1. Procédé de recyclage d'éléments de revêtement intérieur de véhicules constitués de pièces moulées contrecollées de fibres de bois, caractérisé par les stades suivants :
a) la pièce moulée contrecollée est soumise à une opération de gonflement, augmentant au moins son épaisseur, par action d'humidité afin de désagréger le composite de fibres de bois et assouplir les fibres de bois,
b) la pièce moulée ramollie dans le composite de fibres de bois est dégagée des pièces de montage qui y adhèrent par des opérations de flexion,
c) ensuite, le composite de fibres de bois ramolli est désagrégé par un stade d'effilochage en matière fibreuse directement réutilisable par séparation simultanée de la matière de contrecollage de la matière fibreuse, et enfin
d) la matière fibreuse et la matière de contrecollage, présentes après le stade c) sous la forme d'un mélange, sont séparées mécaniquement l'une de l'autre en raison de leurs calibres et/ou poids spécifiques différents.

2. Procédé selon la revendication 1, caractérisé en ce que la désagrégation du composite de fibres de bois et l'assouplissement des fibres de bois sont réalisés au moyen d'eau, éventuellement à température élevée.

3. Procédé selon la revendication 1 ou 2, caractérisé en ce que les opérations de flexion comprennent un foulage et/ou un aplatissement de la pièce moulée.

4. Procédé selon l'une quelconque des revendications 1 à 3, caractérisé en ce qu'on utilise, pour désagréger le composite de fibres de bois ramolli, un fluide à grande vitesse d'écoulement qui est dirigé sur la face de fibres de bois des pièces moulées.

5. Procédé selon l'une quelconque des revendications 1 à 3, caractérisé en ce que le composite de fibre de bois ramolli est désagrégé par action d'un rouleau à pointes rotatif.

6. Procédé selon au moins l'une quelconque des revendications 1 à 5, caractérisé en ce que la séparation entre la matière fibreuse et la matière de contrecollage se fait par criblage à l'air.

7. Procédé selon au moins l'une quelconque des revendications 1 à 5, caractérisé en ce que la séparation de la matière fibreuse se fait par criblage au moyen d'un tamis.

8. Dispositif de réalisation du procédé selon l'une quelconque des revendications 1 à 7, caractérisé par un bain d'eau à température contrôlée (3) avec un transporteur à chaîne (1), un poste de flexion et/ou de foulage (8) avec évacuation correspondante des pièces de montage (17) enlevées par flexion et/ou foulage, un dispositif (9) pour désagréger le composite de fibres de bois en déchiquetant la matière de contrecollage, un poste de criblage (13, 14, 15) agencé ensuite pour séparer mécaniquement la matière fibreuse et les fragments grossiers (12) déchiquetés de la matière de contrecollage, ainsi que des dispositifs de transport (1, 7, 27) pour le transport des pièces moulées (2, 32) ou leurs composants entre les postes de traitement.

9. Dispositif selon la revendication 8, caractérisé en ce que le dispositif (9) utilisé pour désagréger le composite de fibres de bois ramolli est constitué d'au moins un rouleau à aiguilles (10) avec un dispositif de serrage associé (11), le rouleau à aiguilles (10) exerçant des forces de traction sur la matière de contrecollage et le composite de fibres de bois (32).

10. Dispositif selon la revendication 8 ou 9, caractérisé en ce que le poste de flexion et/ou de foulage (8) est une cage de laminage avec plusieurs cylindres.

11. Dispositif selon l'une quelconque des revendications 8 à 10, caractérisé en ce que les dispositifs de transport (1, 7, 27) se présentent sous la forme de transporteurs à bande, à chaîne et/ou à air.

12. Dispositif selon la revendication 11, caractérisé en ce que le transporteur à air pour la matière fibreuse de bois (13) est exploité avec de l'air chauffé.

13. Dispositif selon l'une quelconque des revendications 8 à 12, caractérisé en ce que le poste de criblage pour séparer la matière fibreuse de la matière de contrecollage est constitué d'une bande de criblage tournante (15) à laquelle est affecté, sur sa face inférieure, au moins par sections, un caisson de dépression (14).

14. Dispositif selon la revendication 13, caractérisé en ce qu'au moins une brosse rotative (19) est affectée à la face supérieure de la bande de criblage (15), dans la zone du caisson de dépression (14).

15. Dispositif selon l'une quelconque des revendications 8 à 12, caractérisé en ce que le poste de criblage présente un tambour de criblage rotatif.

16. Dispositif selon la revendication 15, caractérisé en ce que l'axe du tambour de criblage rotatif est incliné par rapport à de l'horizontale.

17. Dispositif selon la revendication 15 ou 16, caractérisé en ce qu'au moins un caisson de dépression est affecté à la face externe du tambour de criblage, au moins par sections.

18. Dispositif selon l'une quelconque des revendications 15 à 17, caractérisé en ce que la face interne du tambour de criblage présente des éléments de transport sous la forme de surfaces de guidage ou de moyens analogues.

19. Dispositif selon l'une quelconque des revendications 15 à 18, caractérisé en ce que des brosses effectuant un mouvement relatif vis-à-vis de la paroi du tambour au moins par sections sont affectées à la face interne du tambour de criblage.
